# FASCICULE DE BREVET EUROPEEN

(11) **EP 1 357 000 B1**
(45) Date de publication et mention de la délivrance du brevet: **06.07.2005**
(21) Numéro de dépôt: 03291011.9
(22) Date de dépôt: 24.04.2003
(51) Int. Cl.: B60R 21/16

(54) **Dispositif et procédé de pliage de sac gonflable pour dispositif de sécurité de véhicule automobile**
Vorrichtung und Verfahren zum Falten eines Gassacks einer Sicherheitsvorrichtung für ein Fahrzeug
Apparatus and method for folding an airbag for a security device for a vehicle

(30) Priorité: 26.04.2002 FR 0205315
(43) Date de publication de la demande: 29.10.2003
(73) Titulaire: Dalphi Metal Espana, S.A., 28006 Madrid (ES)
(72) Inventeur: Pena Moradillos, Manuel, 63212 Vigo (ES)
(74) Mandataire: Jacobson, Claude

(56) Documents cités:
- DE-A- 19 714 174
- US-A- 6 115 998
- US-A1- 2001 015 550

## Description

La présente invention concerne un dispositif de pliage de sac gonflable d'un dispositif de sécurité de véhicule automobile, comportant une table sensiblement horizontale destinée à supporter un sac vide étalé, de sorte que le sac est maintenu en position sur la table au niveau d'une partie fixe, et au moins un organe de compactage déplaçable suivant au moins une direction parallèle à la table, de façon à pouvoir réaliser une opération de compactage du sac en se déplaçant d'un point périphérique du sac vers la partie fixe.

Un tel dispositif est connu, par exemple, du document US-A-6 115 998 qui divulgue aussi un procédé de pliage d'un sac gonflable selon le préambule de la revendication 17.

On connaît dans l'état de la technique un certain nombre de machines de pliage de sacs gonflables ou «air-bags» qui réalisent, à grande vitesse et de façon automatisée, de telles opérations de pliage et la mise en place du sac équipé de son générateur de gaz dans un boîtier.

En particulier, on connaît des dispositifs dans lesquels on maintient le sac au niveau du générateur de gaz, qui définit la partie fixe du sac, et on compacte, au moyen de quatre pistons décalés de 90° et animés d'un mouvement radial, le sac confiné entre la table de support et une plaque supérieure espacée de celle-ci d'une hauteur prédéterminée.

Avec de tels dispositifs, on resserre le sac en actionnant les pistons par paires, les pistons d'une paire étant décalés de 180° et actionnés radialement vers le centre dans des directions opposées. Après l'actionnement de la première paire, on actionne la seconde paire, de sorte que les pistons de la seconde paire se déplacent à l'intérieur de l'espacement défini par la première.

Dans de tels dispositifs, les pistons de la seconde paire sont en général de dimensions inférieures à ceux de la première paire pour pouvoir se déplacer à l'intérieur de l'espacement défini par la première, après resserrement. Ces dispositifs nécessitent des réglages extrêmement précis pour que, lors de l'opération de resserrement du sac par la deuxième paire, les pistons se déplacent sans contact mais avec un espacement très faible par rapport à ceux de la première paire. Malgré la précision du réglage, il peut se produire des phénomènes de coincement du sac entre les pistons, pouvant entraîner un endommagement du sac.

Un premier but de l'invention est de diminuer ces risques d'endommagement du sac, et de faciliter le réglage du dispositif de pliage, tout en augmentant la standardisation des pistons de compactage, de façon à pouvoir utiliser les mêmes pistons pour le plus grand nombre possible de géométries différentes de sac.

A cet effet, suivant l'invention, l'organe de compactage comprend deux réglettes solidaires l'une de l'autre, sensiblsment perpendiculaires et s'étendant, en fonctionnement, parallèlement à la table, l'organe de compactage étant déplaçable, alternativement, suivant l'une et l'autre des directions horizontales perpendiculaires respectivement à chaque réglette.

Du fait de la configuration en équerre de l'organe de compactage, on peut réaliser de façon particulièrement fiable un pliage complet du sac avec un faible nombre d'opérations et des déplacements simples et/ou peu nombreux de cet organe de compactage.

On a constaté en outre qu'un pliage obtenu dans un confinement en hauteur ne donne pas une totale satisfaction, notamment lorsque les sacs pliés présentent des dissymétries importantes. En effet, dans le cas d'air-bags conducteurs qui sont généralement de forme circulaire et dont le générateur de gaz est disposé au centre, le pliage dans un espace confiné de hauteur prédéterminée conduit à une géométrie de pliage, et par conséquent à un comportement lors du déploiement du sac, relativement uniforme pour la totalité du sac. A l'inverse, dans le cas d'air-bags passagers ou latéraux, la forme du sac est rarement circulaire, et le générateur de gaz peut être nettement décentré par rapport à 1a surface formée par le sac étalé. Dans ces conditions, il n'est pas entièrement satisfaisant de prévoir un confinement dans lequel s'effectue le pliage.

Un autre but de l'invention est de proposer un dispositif de pliage de sac gonflable qui permette de réaliser un pliage automatisé et d'obtenir une configuration de pliage relativement uniforme quelle que soit la géométrie du sac, et quelle que soit la partie du sac considérée.

A cet effet, un dispositif suivant l'invention comporte en outre au moins un organe presseur lié en translation horizontale à l'organe de compactage, et mobile par rapport à celui-ci suivant un axe sensiblement vertical entre une position haute au-dessus de la table et une position basse de pression sur le sac.

Grâce à cette disposition, les plis ne sont pas réalisés de façon naturelle du fait d'une paroi supérieure de confinement, mais forcés par des organes presseurs.

Suivants d'autres caractéristiques de l'invention :
- ledit organe de compactage est monté mobile en rotation par rapport à la table autour de l'axe vertical passant par la partie fixe, de façon à pouvoir prendre successivement deux positions angulaires décalées de 180° par rapport audit axe, correspondant à quatre opérations élémentaires successives de compactage du sac, à partir de différents points périphériques du sac ;
- le dispositif de pliage comprend un deuxième tel organe de compactage dont les réglettes sont respectivement parallèles aux deux réglettes du premier organe de compactage ;
- chaque organe de compactage est mobile verticalement, entre une position active en contact avec la table, et une position inactive dégagée au-dessus de la table, de sorte que les organes de compactage peuvent être en position active ou inactive, en alternance l'un par rapport à l'autre ;
- ledit organe presseur est mobile par rapport à l'organe de compactage suivant un mouvement alternatif entre les positions haute et basse ;
- ledit organe presseur est adapté pour être, dans sa position haute, dégagé du sac ;
- le dispositif de pliage comporte deux tels organes presseurs décalés dans la direction de déplacement de l'organe de compactage ;
- lesdits organes presseurs sont adaptés pour être animés d'un mouvement relatif en translation l'un par rapport à l'autre, suivant leur axe de déplacement sensiblement vertical ;
- le dispositif de pliage comprend pour chaque réglette, un organe presseur associé, actif lors du déplacement de l'organe de compactage de ladite réglette dans la direction perpendiculaire à ladite réglette ;
- le dispositif de pliage comporte au moins un organe de rétention mobile suivant un axe sensiblement vertical entre une position dégagée du sac située au-dessus de la table, et une position d'appui sur une partie du sac radialement extérieure par rapport à la partie fixe, définissant une partie de rétention ;
- le dispositif de pliage comporte des moyens électroniques programmables de contrôle et de commande de la position et du déplacement de l'organe de compactage et de l'organe de rétention ;
- la table est pourvue de pinces adaptées pour passer d'une position escamotée dans la table à une position en saillie de serrage d'une partie de sac pliée ;
- le dispositif de pliage comprend un poste de chauffage dans lequel sont disposés des moyens de chauffage du sac ;
- le dispositif de pliage comprend un organe de maintien mobile suivant un axe sensiblement vertical, entre une position dégagée au-dessus de la table et une position d'appui plus basse, et la table est susceptible de rotation autour d'un axe sensiblement vertical, de façon à prendre au moins deux positions angulaires par rapport audit axe, une position correspondant à la position du sac dans le poste de chauffage, et l'autre position correspondant à la position de la partie fixe au droit de l'organe de maintien et aux opérations de compactage ; et
- la table est pourvue de moyens d'aspiration adaptés pour exercer sur le sac des efforts d'aspiration tendant à le plaquer localement sur la table.

L'invention concerne aussi un procédé d'utilisation d'un dispositif tel que décrit précédemment pour réaliser le pliage d'un sac gonflable pour dispositif de sécurité de véhicule automobile.

Suivant ce procédé, on place le sac vide étalé sur une table, on maintient le sac plaqué sur la table autour d'une partie fixe en exerçant un effort de maintien sur ladite partie fixe du sac. On réalise ensuite la séquence d'opérations successives suivante :
- une première opération élémentaire de compactage, dans laquelle on compacte le sac en déplaçant l'organe de compactage vers la partie fixe suivant une première direction sensiblement parallèle à la table et orthogonale à la première réglette de l'organe de compactage ;
- on maintient la partie de sac ainsi compactée en exerçant une pression sensiblement verticale, au moyen d'un organe de rétention ;
- une deuxième opération élémentaire de compactage, dans laquelle on compacte le sac en déplaçant le même organe de compactage vers la partie fixe dans une direction sensiblement parallèle à la table et orthogonale à la deuxième réglette du même organe de compactage ; et
- on maintient la partie de sac ainsi compactée en exerçant une pression sensiblement verticale, au moyen d'un organe de rétention.

Suivant d'autres caractéristiques du procédé suivant l'invention
- on réalise consécutivement deux telles séquences d'opérations et qu'entre lesdites deux séquences, on déplace angulairement l'organe de compactage par rapport à un axe sensiblement vertical passant par la partie fixe ;
- on réalise les opérations successives suivantes :
   . on réalise une première opération élémentaire de compactage au moyen d'une première réglette du premier organe de compactage;
   . on dégage le premier organe de compactage dans sa position inactive, de sorte qu'il ne puisse interférer avec le déplacement du deuxième organe de compactage ;
   . on réalise une première opération élémentaire de compactage au moyen d'une première réglette du deuxième organe de compactage, parallèle à la première réglette du premier organe de compactage ;
   . on réalise une deuxième opération élémentaire de compactage au moyen de la deuxième réglette du deuxième organe de compactage ;
   . on dégage le deuxième organe de compactage dans sa position inactive, de sorte qu'il ne puisse interférer avec le déplacement du premier organe de compactage, et on déplace le premier organe de compactage dans sa position active ; et
   . on réalise une deuxième opération élémentaire de compactage au moyen de la deuxième réglette du premier organe de compactage ;
- durant chaque opération élémentaire de compactage, on exerce des pressions alternatives suivant une direction sensiblement verticale sur la partie de sac en cours de compactage, de façon à former des plis ;
- on exerce lesdites pressions alternatives en au moins deux régions de la partie de sac en cours de compactage, décalées dans la direction de déplacement parallèle à la table ;
- on crée une dépression entre le sac et la table de support par des moyens d'aspiration ; et
- on réalise une opération de chauffage du sac, préalablement à la séquence d'opérations élémentaires.

Un exemple de réalisation de l'invention va maintenant être décrit en regard des dessins annexés, sur lesquels :
- la Figure 1 est une vue schématique de dessus de la table de support d'un dispositif suivant l'invention, d'un sac gonflable à plier et d'un boîtier, dans quatre positions successives, et d'un opérateur ;
- la Figure 2 est une vue schématique en élévation d'une partie d'un dispositif suivant l'invention, et du sac gonflable prêt à être plié ;
- les Figures 3A, 4A, 5, 6A à 9A, 10 à 13 sont des vues analogues du sac et du dispositif dans des positions consécutives représentant des étapes respectives du procédé suivant l'invention ; et
- les Figures 3B, 4B, 6B à 9B sont des vues schématiques partielles de dessus du sac et du dispositif, correspondant respectivement aux Figures 3A, 4A, 6A à 9A.

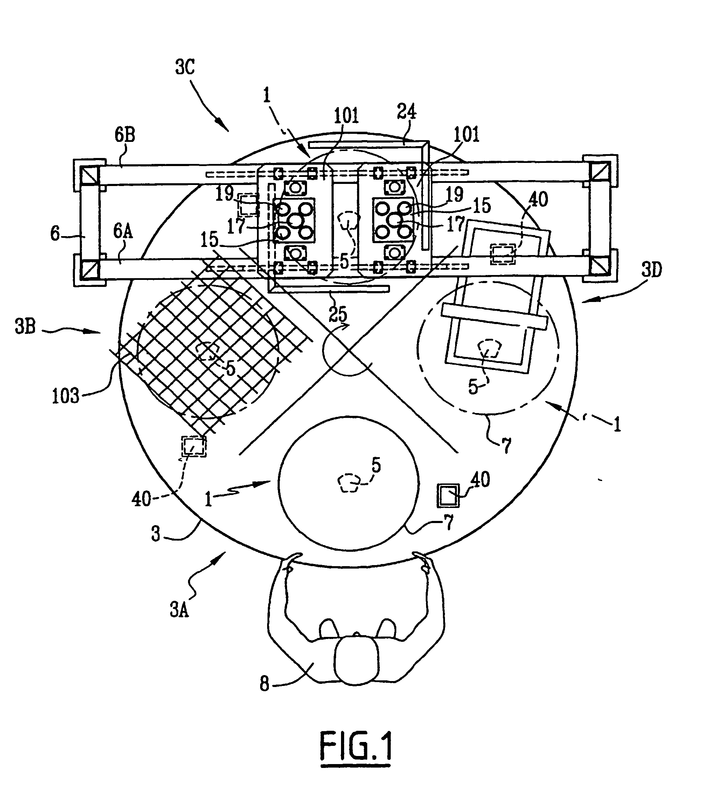

Sur la Figure 1, on a représenté, en vue de dessus, un sac gonflable 1 vide, étalé sur une table de support horizontale 3. Le sac 1 est, dans l'exemple représenté, de forme circulaire, mais pourrait être de toute autre forme. Il est équipé de son générateur de gaz 5, fixé à l'intérieur de l'enveloppe gonflable 7 du sac, par exemple dans une partie située en son centre. Le générateur 5 est éventuellement muni d'un diffuseur.

La table 3 est susceptible de rotation autour d'un axe vertical passant par son centre, et peut prendre quatre positions angulaires par rapport à cet axe.

La première position angulaire correspond à une première position du sac 1 (représentée en traits pleins). Cette première position donne un libre accès à la table 3 pour un opérateur 8, cet accès lui permettant de placer et de fixer le sac 1 sur la table 3. Il va de soi que cette opération peut être réalisée également par un robot. La position de libre accès est repérée par la référence 3A sur la Figure. Dans l'exemple de réalisation représenté, deux types de sac différents peuvent être placés dans ce premier poste (poste de charge). Ce sont par exemple des sacs de type « conducteur » généralement de forme circulaire, et des sacs de type « passagers » de forme qui peut être rectangulaire.

Le dispositif de pliage objet de l'invention comprend un poste de chauffage 3B dans lequel sont disposés des moyens de chauffage du sac 103, par exemple des conducteurs électriques résistifs intégrés dans la table 3 en formant une grille. La deuxième position angulaire de la table 3 autour de son axe vertical correspond à la position du sac 1 dans le poste de chauffage 3B.

La troisième position angulaire de la table 3, repérée par la référence 3C, correspond à la position du sac dans laquelle s'effectuent les opérations de compactage qui vont être décrites en référence aux Figures suivantes. Le générateur 5 se situe alors au droit d'un organe de maintien qui sera décrit plus loin.

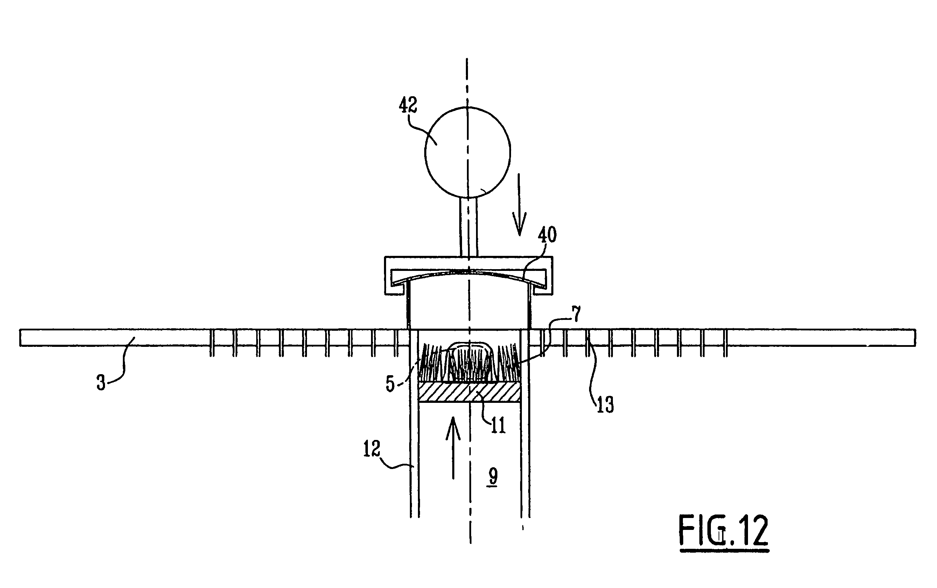

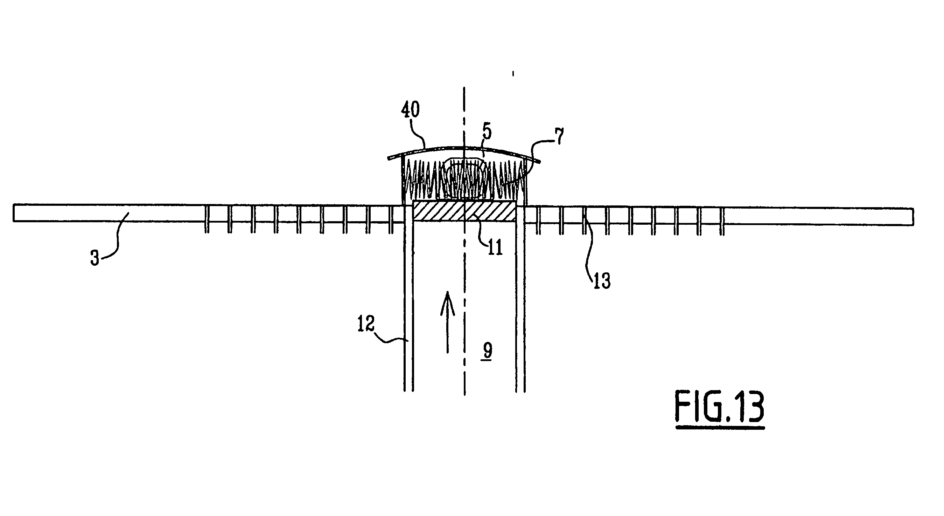

Dans la quatrième position angulaire de la table 3, repérée par la référence 3D, le sac préalablement compacté est placé dans un boîtier formant couvercle, comme cela sera décrit en référence aux Figures 12 et 13.

Le dispositif de pliage comprend des moyens de contrôle et de commande de la rotation de la table 3 autour de son axe vertical, permettant de placer la table 3 successivement dans ses quatre positions, à savoir : sa position 3A de libre accès, sa position 3B de chauffage du sac, sa position 3C de compactage du sac, et sa position 3D de mise en boîtier du sac.

Le chauffage du sac préalablement au compactage (ou pliage) proprement dit permet d'éliminer, ou tout du moins de réduire, la tension de l'enveloppe 7 et de faciliter son compactage.

On a représenté ici une configuration du dispositif de pliage dans laquelle les opérations de charge (ou fixation) du sac, de chauffage, de pliage, et de mise en boîtier s'effectuent dans quatre postes distincts, mais on peut prévoir de réaliser ces opérations en un nombre inférieur de postes ou même en un seul poste fixe.

En particulier, l'opération et le poste de chauffage du sac sont facultatifs et peuvent n'être mis en oeuvre que pour certains types de sacs.

Dans le poste de pliage 3C, au-dessus de la table 3, est prévu un pont 6 sous la forme d'un châssis rectangulaire, dont deux poutres parallèles 6A, 6B supportent à coulissement deux blocs 101, dans lesquels sont montés des pistons extractibles. Les blocs 101 sont déplaçables en translation sur le pont 6, sous l'effet de moyens d'entraînement actionnés par des moyens de contrôle et de commande (non représentés). Chaque bloc 101 est déplaçable entre une position inactive dégagée de la zone de pliage, et une position active au droit du sac 1, centrée sur le générateur 5. Chaque bloc 101 est adapté pour participer au pliage d'un type de sac donné, parmi les deux types qui peuvent être introduits dans le poste de charge 3A. Naturellement, pour un type de sac donné, un seul bloc 101 est amené en position active, tandis que l'autre bloc reste ou est amené en position inactive.

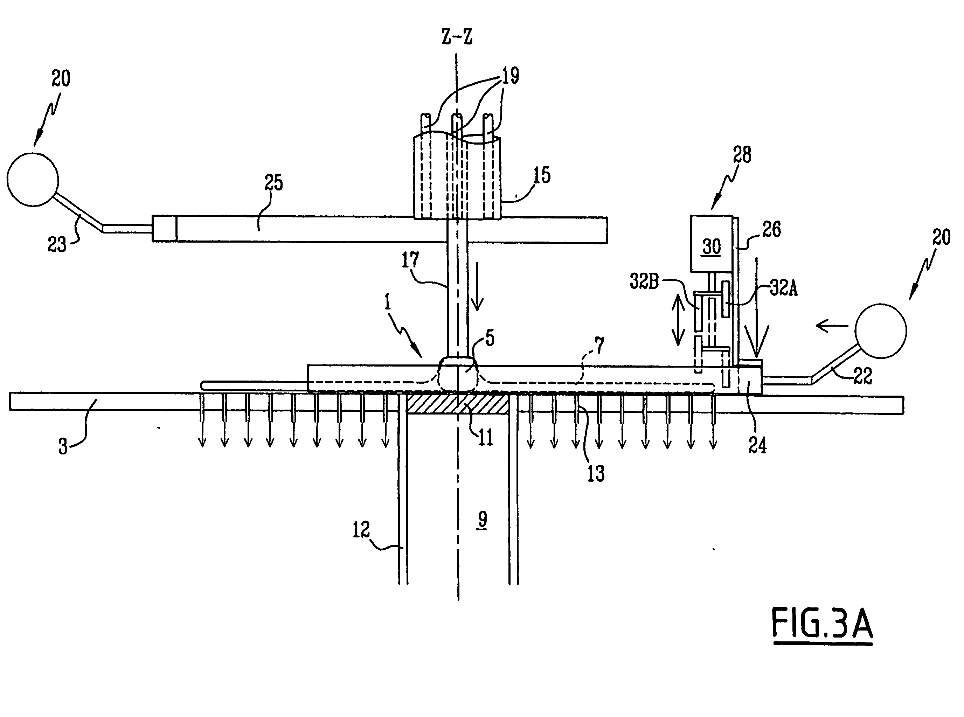

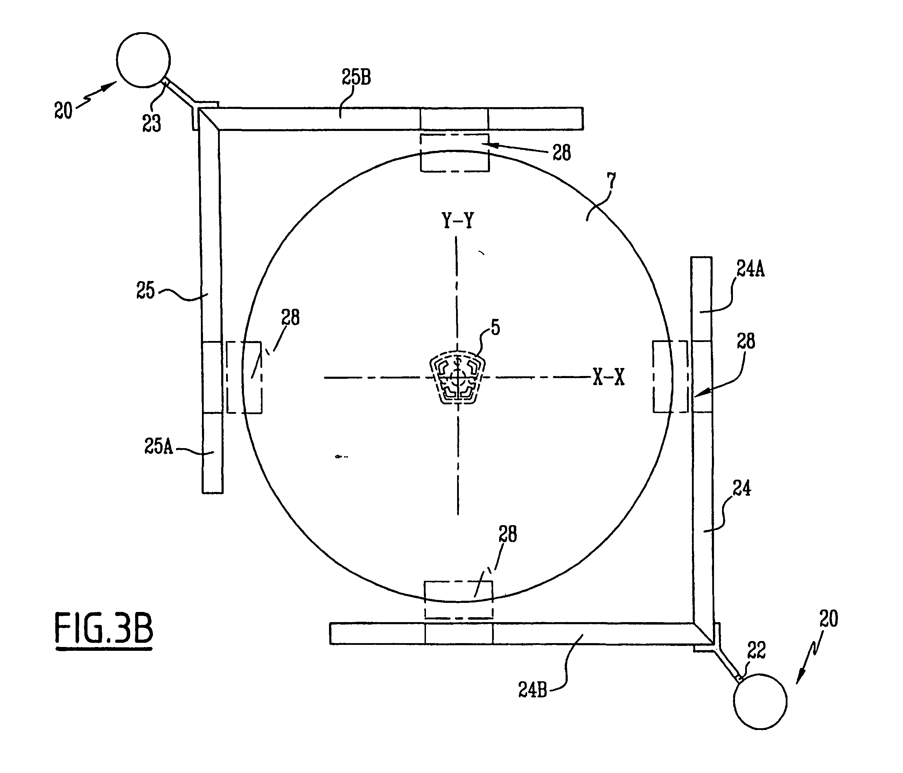

Le dispositif de pliage comporte en outre, associé au bloc 101, une paire d'organes de compactage en équerre, dont le fonctionnement sera détaillé plus loin, à partir de la Figure 3.

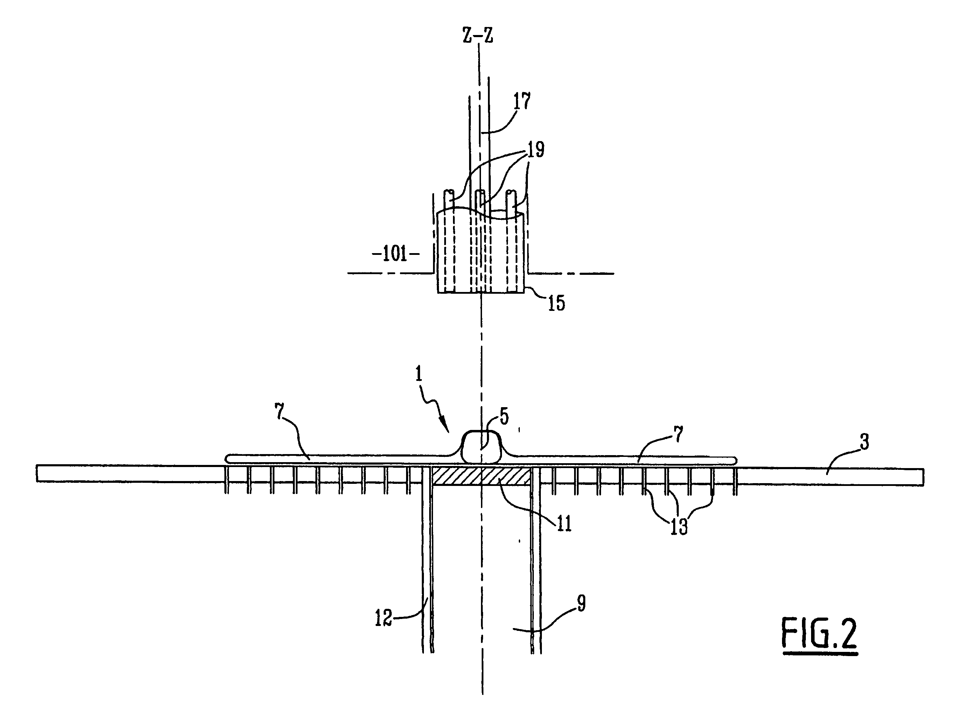

On se réfère maintenant à la Figure 2, qui représente, dans un plan vertical, une partie de la table de support 3 sur laquelle est étalé le sac gonflable vide 1.

La table 3 présente un piston cylindrique 9 de support et d'expulsion dont l'extrémité supérieure est conformée en plateau 11. Le piston 9 et le plateau 11 sont enveloppés coaxialement dans un cylindre creux vertical 12, mobile suivant l'axe vertical commun Z-Z, et de section transversale complémentaire d'une ouverture centrale de la table 3. Le plateau 11 et le cylindre creux 12 affleurent au niveau de la surface supérieure de la table 3. Le plateau 11 comporte une empreinte (non représentée) complémentaire du générateur 5, de façon qu'un opérateur qui place le générateur 5 sur le plateau 11 puisse l'y emboîter, l'empreinte assurant une pré-fixation du générateur 5 par rapport à la table 3. Le cylindre creux 12 définit des parois de confinement, et l'axe vertical commun Z-Z définit un axe central traversant l'empreinte prévue pour le générateur de gaz 5.

L'empreinte est de préférence pourvue de moyens de détection de la présence d'un sac et de son type, adaptés pour coopérer avec des moyens complémentaires prévus sur le générateur 5. Ces moyens de détection sont reliés aux moyens de contrôle et de commande des moyens d'entraînement des blocs 101. Ainsi, en fonction du type du générateur 5 placé dans l'empreinte, les moyens de contrôle et de commande d'entraînement des blocs 101 peuvent amener en position active le bloc correspondant au type de sac qui a été reconnu.

Naturellement, on pourrait doter le dispositif de pliage d'un nombre supérieur de blocs 101, de moyens de détection, et de moyens de contrôle et de commande adaptés pour pouvoir traiter un nombre supérieur de types de sacs différents.

Dans tout ce qui suit, le fonctionnement du dispositif sera décrit sans distinction du type de sac présent sur la table, et donc sans distinction de l'un ou l'autre des blocs 101 placés en position de travail.

Dans la table 3, est pratiquée une série de conduits 13 débouchant à la surface supérieure de la table 3, et constituant des conduits d'aspiration, qui permettent de créer localement un vide relatif entre l'enveloppe 7 du sac 1 et la table 3. Les conduits d'aspiration 13 sont reliés à une source de dépression (non représentée), telle qu'une pompe. Ils constituent des moyens d'aspiration tendant à plaquer localement l'enveloppe 7 du sac 1 sur la table 3, lorsqu'ils sont sollicités.

Chaque bloc 101 (seul le bloc actif étant représenté) comprend, situé au droit du générateur 5 et du piston d'expulsion 9 lorsque le bloc est en position active, un piston de compression 15. Ce piston de compression 15 est constitué d'un cylindre sensiblement de même géométrie que le piston d'expulsion 9, déplaçable verticalement et coaxialement par rapport au piston d'expulsion 9.

A l'intérieur du piston de compression 15 sont montés, coulissants verticalement, des pistons secondaires de plus petites dimensions. Ces pistons secondaires sont constitués d'une part d'un piston central formant organe ou piston de maintien 17, et d'autre part d'une pluralité d'organes ou pistons de rétention 19 répartis autour du piston de maintien 17.

Le piston de maintien 17 est destiné à prendre appui sur la région de l'enveloppe 7 disposée au-dessus du générateur 5, tandis que les pistons de rétention 19 sont prévus pour prendre appui sur des régions périphériques de l'enveloppe 7, autour et à proximité du générateur 5.

Dans la configuration représentée à la Figure 2, le piston de compression 15, et solidairement les pistons secondaires 17, 19, sont dégagés du sac 1, c'est-à-dire dans une position située au-dessus de la table et sans contact avec le sac 1, de sorte qu'un opérateur peut manipuler le sac pour sa mise en place sur le plateau 11.

Dans tout ce qui suit, le bloc 101 ne sera représenté que par ses pistons 15, 17, 19.

A la Figure 3A, on a représenté le piston de maintien 17 en appui sur le générateur 5, la région du générateur 5 étant destinée à constituer une partie fixe du sac, centrée sur l'axe vertical Z-Z constituant l'axe central de compactage du sac 1.

Le dispositif de pliage comporte un automate, schématisé sous la référence 20, piloté par des moyens électroniques programmables de contrôle et de commande non représentés. L'automate 20 comporte un bras 22 pourvu à une extrémité d'un organe de compactage 24, configuré en équerre (voir Figure 3B), et présentant une face active verticale tournée vers l'axe central et une face supérieure. L'organe de compactage 24 est de préférence fixé de façon amovible au bras 22, de sorte qu'il peut être remplacé par un autre de dimensions différentes, en fonction du type de sac à plier. Il peut également être remplacé par un organe de saisie destiné à prendre un boîtier, après l'opération de pliage, et le placer sur le sac plié.

Dans le mode de réalisation représenté, l'automate 20 comporte un deuxième bras 23 pourvu à une extrémité d'un deuxième organe de compactage 25, également configuré en équerre.

Chaque équerre 24, 25 est constituée de deux réglettes orthogonales 24A, 24B et 25A, 25B. Dans l'exemple représenté, les réglettes 24A et 25A d'une part, et les réglettes 24B et 25B d'autre part, sont deux à deux de longueur identique.

Dans la position initiale représentée sur les Figures 3A et 3B, correspondant à la position précédant l'opération de pliage, les deux équerres 24, 25 s'étendent dans des plans horizontaux décalés verticalement. Projetées verticalement dans un même plan horizontal, les deux équerres 24, 25 sont disposées en vis-à-vis,- symétriquement par rapport à un centre fictif défini par la partie fixe 5. Le secteur angulaire de 90° délimité par les réglettes de chaque équerre 24, 25 contient le sac vide étalé 7.

Comme on le verra par la suite, les deux organes de compactage 24, 25 sont actifs alternativement, c'est-à-dire qu'ils peuvent prendre chacun alternativement une position active, en contact (ou sensiblement en contact) avec la surface de la table 3, et une position inactive, sensiblement au-dessus de la table 3 et dégagée de la course de l'équerre active.

Sur la Figure 3A, l'équerre 24 est représentée dans sa position active, tandis que l'équerre 25 est représentée dans sa position inactive.

Le dispositif de pliage pourrait être pourvu d'un seul organe de compactage mobile en rotation par rapport à la table 3 autour de l'axe Z-Z, de façon à pouvoir prendre successivement une pluralité de positions angulaires par rapport à cet axe, correspondant à plusieurs opérations successives de compactage du sac 1, à partir de différents points périphériques du sac, de préférence deux positions angulaires décalées de 180°.

Il va de soi que la géométrie des équerres 24, 25 pourrait être modifiée en fonction du type de sac plié, de sa forme et de ses dimensions. Par exemple, il se pourrait qu'un type de sac à plier ne présente pas la même symétrie, voire ne présente aucune symétrie, par rapport au générateur ou partie fixe 5. On pourrait dans ce cas prévoir des paires d'équerres 24, 25 de dimensions différentes entre elles.

Du fait de l'analogie fonctionnelle entre les deux équerres, on ne décrira dans ce qui suit qu'un seul organe de compactage 24, l'autre organe de compactage 25 étant équipé de façon analogue.

Chaque réglette 24A, 24B de l'organe de compactage 24 est reliée, sur sa face supérieure, à un montant 26 (Figure 3A), ledit montant 26 étant solidaire d'un équipage mobile de pressage 28. L'équipage mobile de pressage 28 présente un corps 30 fixe par rapport au montant 26, et muni de deux pistons verticaux 32A, 32B constituant des organes presseurs. Ces pistons presseurs 32A, 32B sont susceptibles d'être animés d'un mouvement alternatif vertical par rapport au corps 30, entre une position haute dégagée du sac, et une position basse en contact avec celui-ci en le plaquant localement contre la table 3. Par rapport à l'axe central Z-Z, les deux pistons presseurs 32A, 32B sont légèrement décalés radialement, de façon que leurs axes respectifs de translation verticale soient situés au voisinage de la face verticale avant de l'organe de compactage 24, entre celle-ci et l'axe central Z-Z.

Dans le mode de réalisation représenté, chaque réglette de chaque organe de compactage 24, 25 est pourvue d'un équipage mobile de pressage 28, placé sur la réglette dans une position qui dépend de la forme du sac. Dans le cas présent d'un sac de forme circulaire, l'équipage mobile est positionné sur la réglette dans le prolongement d'un diamètre.

En variante, on pourrait prévoir un équipage mobile de pressage 28 unique pour un organe de compactage donné, cet équipage étant susceptible de se déplacer sur l'équerre 24, 25 d'une réglette à l'autre entre deux opérations élémentaires de compactage.

En variante encore, on pourrait prévoir un équipage mobile de pressage 28 unique pour les deux organes de compactage 24, 25, cet équipage mobile étant susceptible de se déplacer après chaque opération élémentaire de compactage, d'une réglette à une autre, et d'une équerre à l'autre.

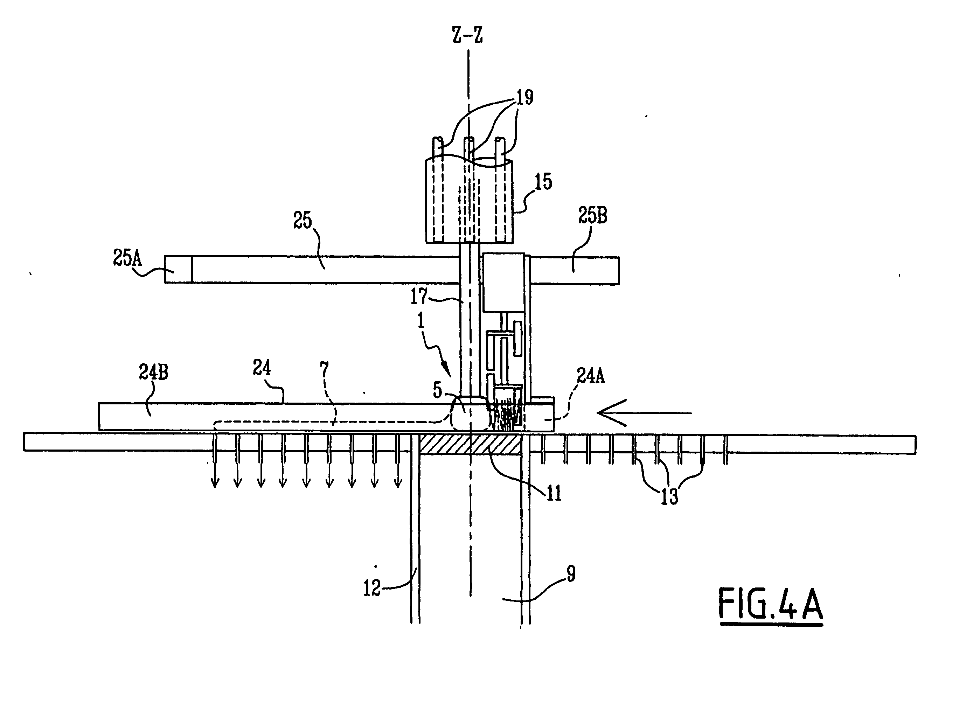

Sur les Figures 3A et 4A, par souci de simplification, on n'a représenté qu'un seul équipage mobile de pressage 28. Les équipages mobiles de pressage sont schématisés sur la Figure 3B en traits mixtes et ne sont pas représentés sur les autres Figures.

Le bras 22 de l'automate 20, et solidairement l'organe de compactage 24, sont susceptibles d'être animés de mouvements de translation horizontale depuis un bord périphérique du sac 1 vers l'axe central Z-Z, et inversement, dans chacune des directions X-X, Y-Y orthogonales aux réglettes 24A, 24B. L'équipage mobile de pressage 28 est essentiellement lié en translation « radiale » (c'est-à-dire dans la direction de déplacement de la réglette associée) à l'organe de compactage 24, du fait de la liaison du montant 26 avec la face supérieure de l'organe de compactage 24. L'équipage mobile de pressage 28 peut éventuellement présenter une liberté de translation radiale par rapport à l'organe de compactage 24, sur une course faible devant la course radiale de l'organe de compactage 24.

Les différents mouvements relatifs des éléments du dispositif de pliage tels que décrits précédemment seront mieux compris à la lecture de la description qui va être faite des opérations du procédé de pliage, en référence aux Figures 3 à 9.

En se reportant à nouveau à la Figure 2, on note que le dispositif de pliage partiellement représenté offre, pour un opérateur, un libre accès à la partie centrale de la table 3, de façon que l'opérateur puisse y placer le sac à plier, ainsi que cela a été représenté. On pourrait prévoir également que cette opération s'effectue de façon automatisée.

A partir de l'étape représentée aux Figures 3A et 3B, le pliage s'effectue de façon automatisée, en commençant par le maintien du générateur 5 au moyen du piston de maintien 17. Pour cela, le piston 17 est actionné en descente et amené en pression sur la région de l'enveloppe 7 disposée au-dessus du générateur 5, le piston d'expulsion 9 et le plateau 11 solidaire étant maintenus fixes par rapport à la table 3.

On crée une dépression entre la table de support 3 et l'enveloppe 7 du sac en générant une aspiration d'air par les conduits d'aspiration 13 (le courant d'aspiration est symbolisé par les flèches verticales descendantes). L'aspiration est créée dans les régions de la table 3 couvertes par les parties d'enveloppe 7 étalées à plat.

Ainsi que cela a été représenté sur la Figure 3A par les flèches associées à l'automate 20, le bras 22 et solidairement l'organe de compactage 24 sont actionnés en translation depuis un point périphérique de l'enveloppe 7 vers l'axe central Z-Z, perpendiculairement à la réglette 24A. Simultanément, les pistons presseurs 32A, 32B sont actionnés dans un mouvement alternatif de montée et de descente. Dans un premier temps, les pistons presseurs 32A, 32B sont actionnés verticalement vers le bas dans un mouvement commun, puis sont animés de mouvements alternatifs, tels que les phases d'appui d'un piston presseur 32A, 32B par rapport à l'autre sur la partie de sac en cours de compactage sont décalées dans le temps. De ce fait, il existe un mouvement de translation relative entre les deux pistons presseurs 32A, 32B.

On réalise ainsi une première opération élémentaire de compactage par la première réglette 24A du premier organe de compactage 24, dans la direction horizontale X-X orthogonale à cette première réglette.

Par souci de clarté, l'automate 20 et les bras 22, 23 ne seront pas représentés sur les figures suivantes, étant entendu que les organes de compactage 24, 25 sont, dans l'exemple illustré, entraînés en mouvement par l'automate 20.

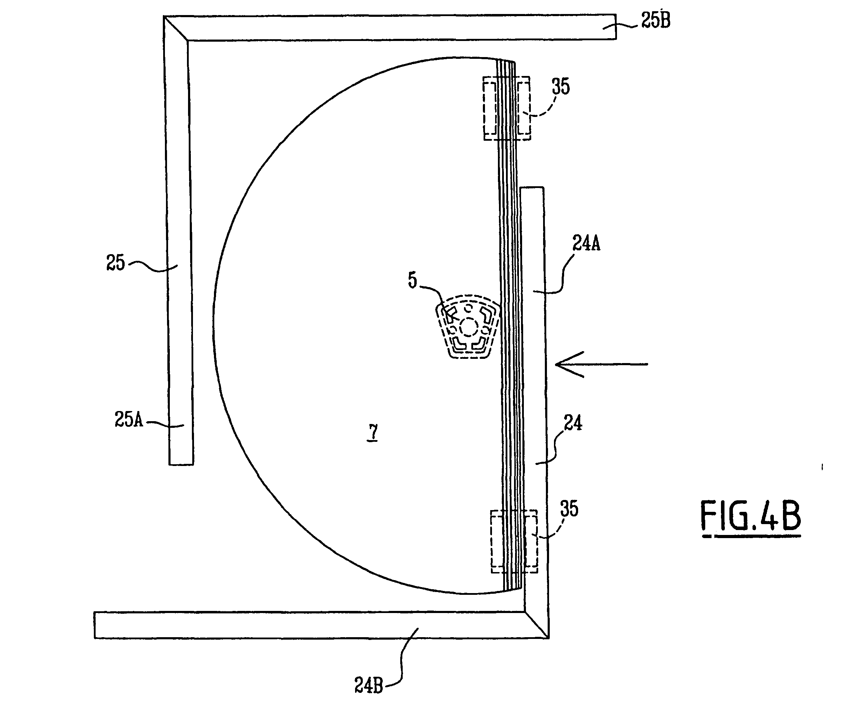

Sur les Figures 4A et 4B, on a schématisé la configuration du dispositif et du sac à la fin de la première opération élémentaire de compactage. L'organe de compactage 24 est alors en fin de course dans la direction X-X, au voisinage du générateur 5. Dans cette position, la face verticale avant de la réglette 24A est située légèrement radialement à l'intérieur du bord périphérique du plateau 11, et une partie de l'enveloppe 7 se trouve alors compactée radialement dans l'encombrement défini par le plateau 11.

On notera que, sur la fin de la phase élémentaire de compactage, l'équipage mobile de pressage 28 peut subir un léger recul par rapport au mouvement du bras 22, ce mouvement de recul étant par exemple obtenu par coulissement du montant 26 sur la réglette. Lors de la fin de course de l'organe de compactage 24, les pistons presseurs 32A, 32B sont également désactivés et dégagés verticalement vers le haut dans un mouvement commun.

On note également que l'aspiration d'air est interrompue dans les conduits d'aspiration 13 dégagés par la partie d'enveloppe 7, au fur et à mesure de son compactage. On comprend en effet que l'aspiration en des régions de la table 3 découvertes est inopérante et sans objet.

Les Figures 4A et 4B représentent le sac 1 partiellement plié suite à l'opération décrite précédemment. Le pliage obtenu est conservé par serrage des plis vers la périphérie du sac, au moyen de pinces 35.

Ces pinces 35, visibles sur la Figure 4B, sont prévues dans la table 3 pour passer d'une position escamotée dans celle-ci à une position en saillie.

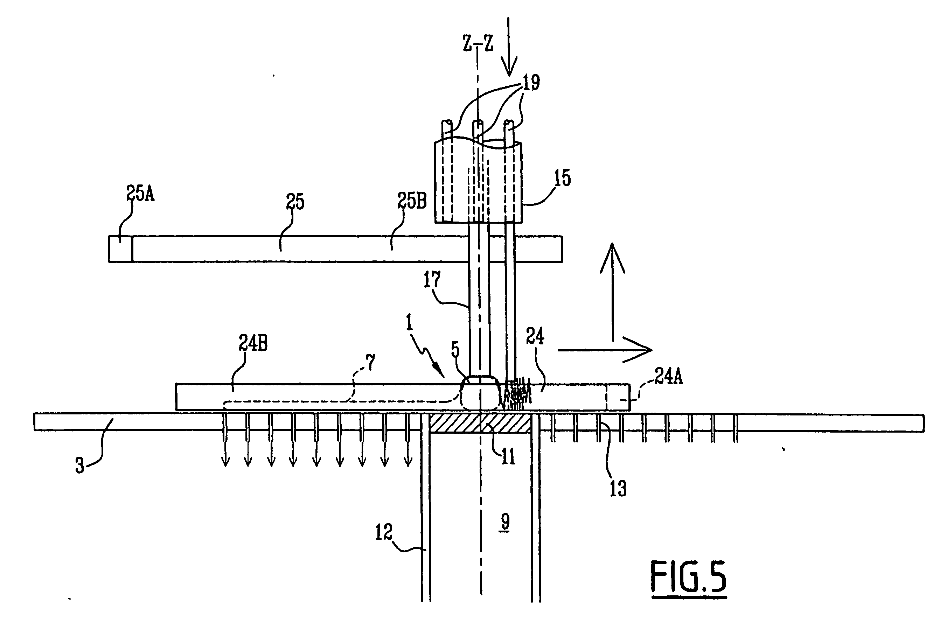

Sur la Figure 5, on a représenté l'étape suivante du procédé de pliage, dans lequel un piston de rétention 19 situé au droit de la partie de l'enveloppe compactée est actionné en descente, de façon à venir prendre appui sur la partie pliée du sac, et à figer le pliage réalisé par la phase ou opération élémentaire de compactage. L'appui de l'organe de rétention 19 est exercé en un point (ou une région) radialement extérieur(e) par rapport à la partie fixe constituée par le générateur 5, ce point (ou région) d'appui définissant une partie de rétention.

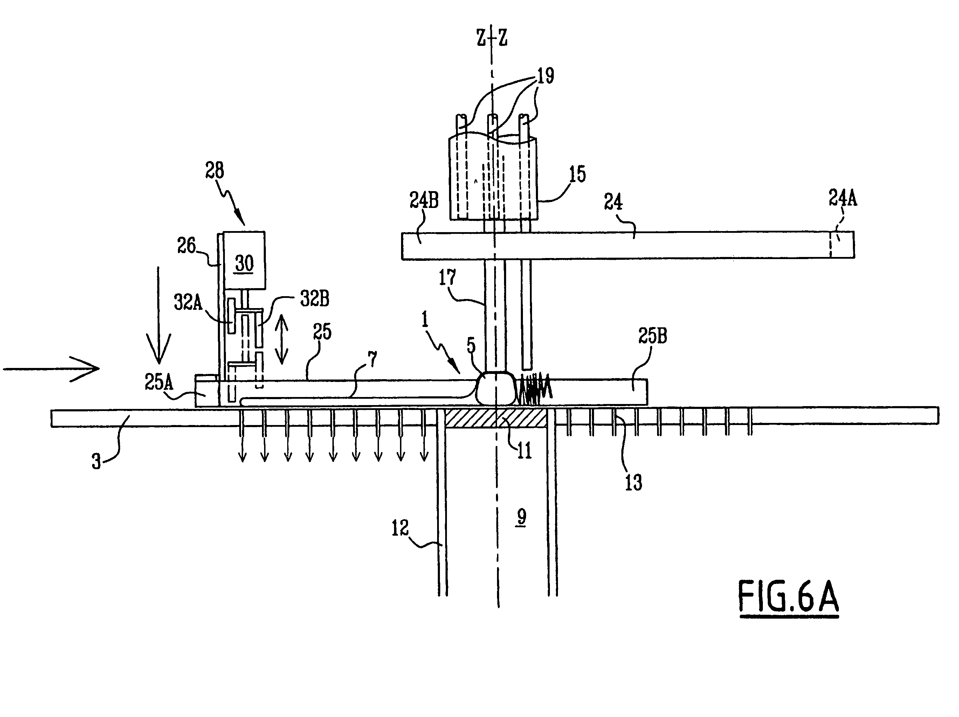

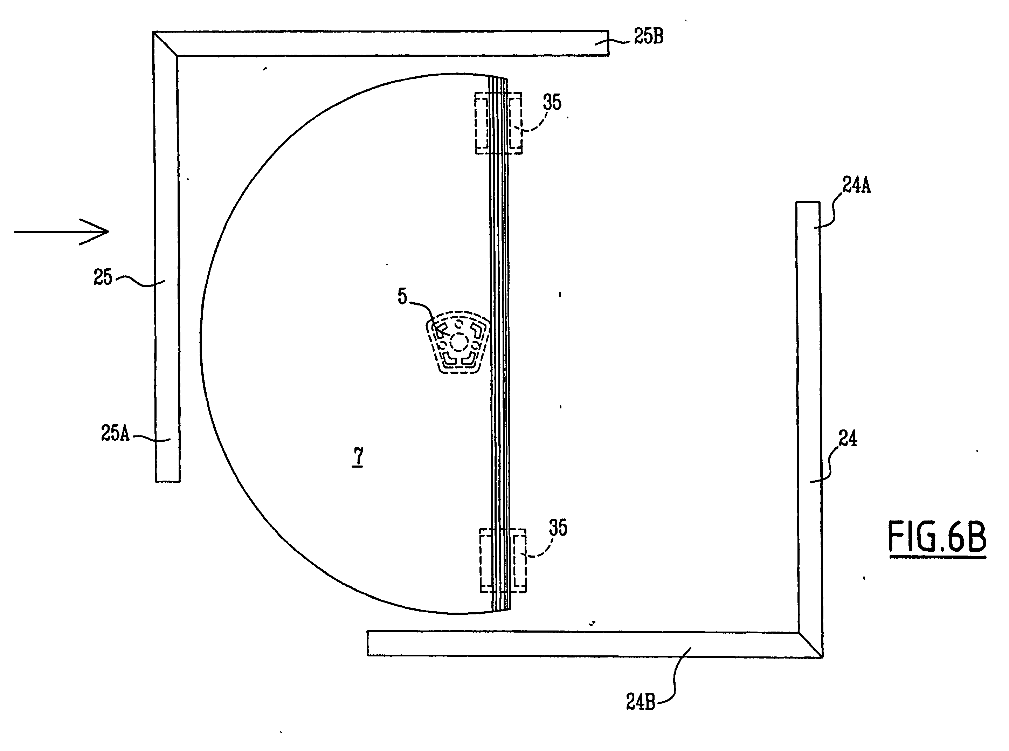

Une fois que le piston 19 a pris appui sur la partie pliée du sac, le premier organe de compactage 24 est dégagé horizontalement, suivant un mouvement de translation inverse au mouvement de compactage, l'équipage mobile 28 étant neutralisé. Le premier organe de compactage 24 est ensuite dégagé de la table 3 verticalement, vers sa position haute inactive, tandis que le deuxième organe de compactage 25 est amené, par translation verticale, dans sa position basse active, au contact ou au voisinage de la table. Ce faisant, le dispositif atteint sa position illustrée aux Figures 6A et 6B.

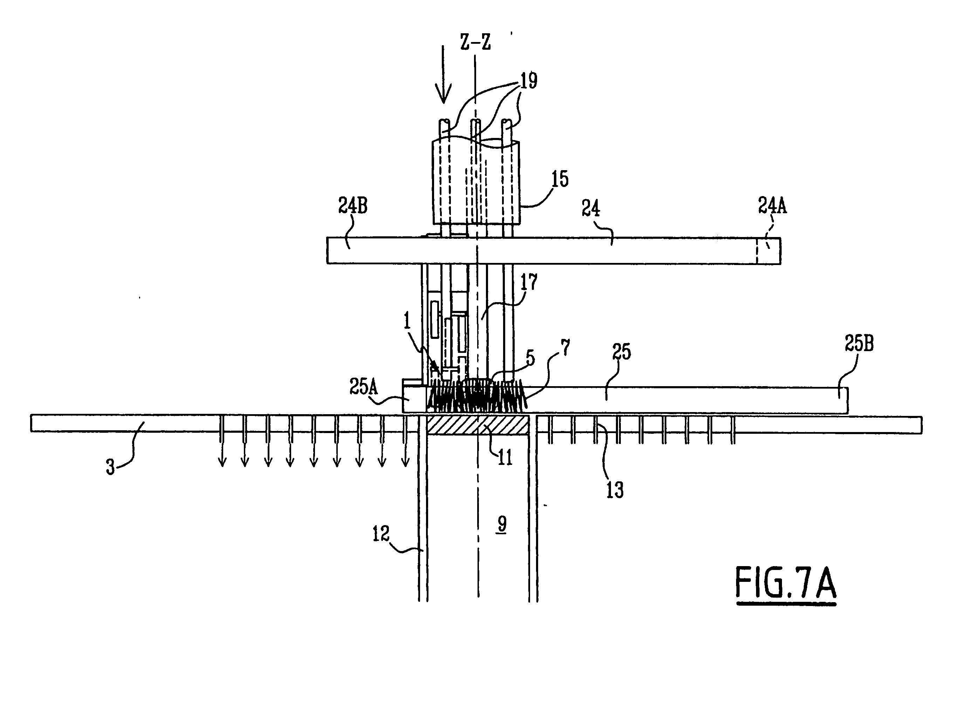

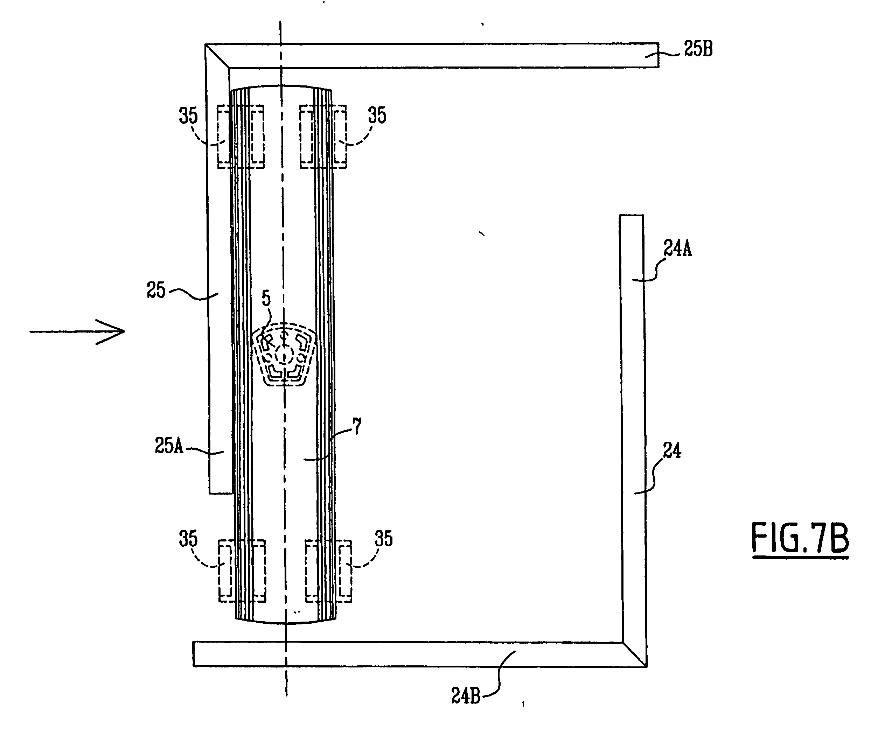

L'opération de compactage dans l'axe X-X, décrite précédemment pour la première opération (ou phase) élémentaire de compactage est reproduite avec la première réglette 25A de la deuxième équerre 25, également suivant l'axe X-X. Sont également reproduites la descente d'un piston de rétention 19 correspondant, et le maintien des plis obtenus par des pinces 35, jusqu'à l'obtention de la configuration représentée sur les Figures 7A et 7B.

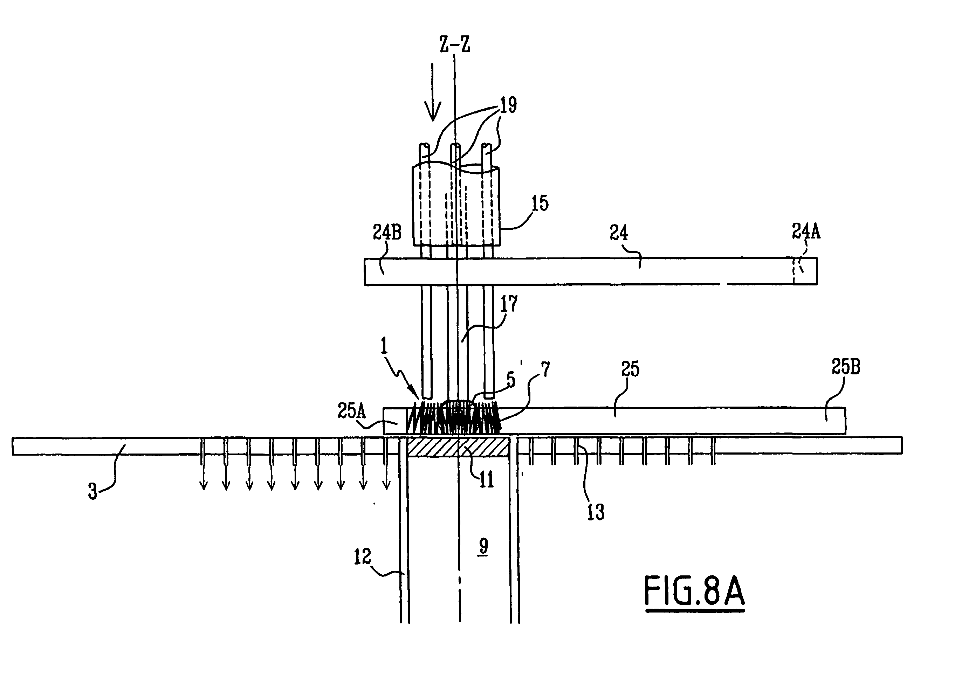

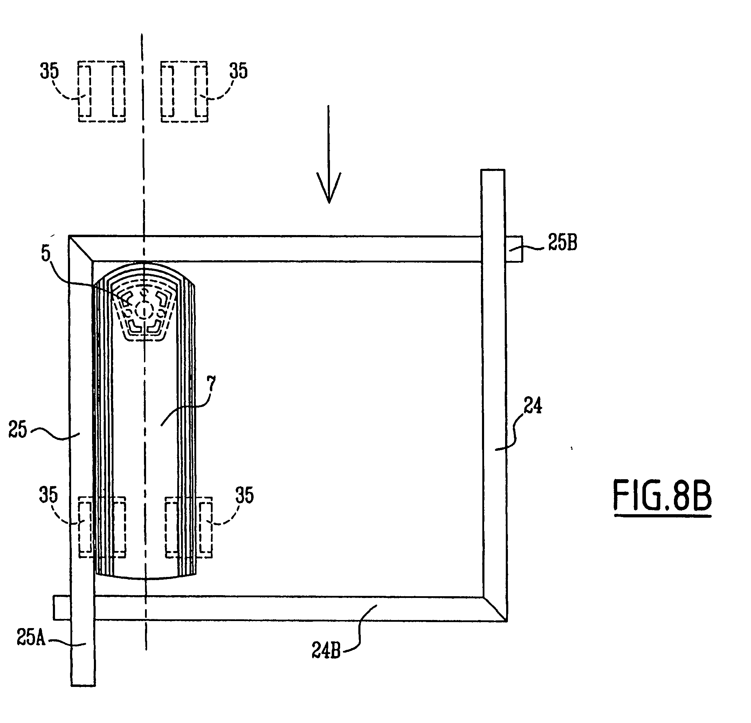

A partir de cette configuration, on reproduit une phase élémentaire de compactage avec la réglette 25B suivant l'axe Y-Y, c'est-à-dire que le deuxième organe de compactage 25 est déplacé suivant l'axe Y-Y orthogonal à la deuxième réglette 25B, l'équipage mobile 28 associé à cette réglette étant activé. Lorsque la réglette 25B atteint le niveau des pinces 35 placées dans sa course, celles-ci sont escamotées dans la table 3 pour permettre le passage de la réglette. En fin de cette phase élémentaire de compactage, on parvient à la configuration représentée aux Figures 8A et 8B.

A partir de ce moment, un autre piston de rétention 19 est actionné vers le bas pour exercer un effort de rétention sur le sac, du côté de la réglette 25B, sur les plis nouvellement obtenus.

Le deuxième organe de compactage 25 est alors déplacé vers sa position inactive au-dessus de la table, tandis que le premier organe de compactage 24 reprend sa position active au niveau de la surface de la table 3, position active identique à sa position initiale de démarrage préalable à la première phase élémentaire de compactage.

A partir de cette position, non représentée, le dispositif de pliage réalise une opération élémentaire de compactage par la deuxième réglette 24B de la première équerre 24, suivant l'axe Y-Y orthogonal à cette même réglette. Comme dans les autres phases élémentaires de compactage, l'équipage mobile 28 associé à la réglette est activé, jusqu'à la position atteinte par l'équerre 24 à la fin de cette phase élémentaire de compactage, la réglette 24B venant au voisinage du générateur de gaz 5. De la même façon que pour la phase de compactage par la deuxième réglette 25B de la deuxième équerre 25, les pinces 35 restées en position en saillie de la table 3 pour maintenir les plis du côté de la réglette 24B sont escamotées au passage de celles-ci.

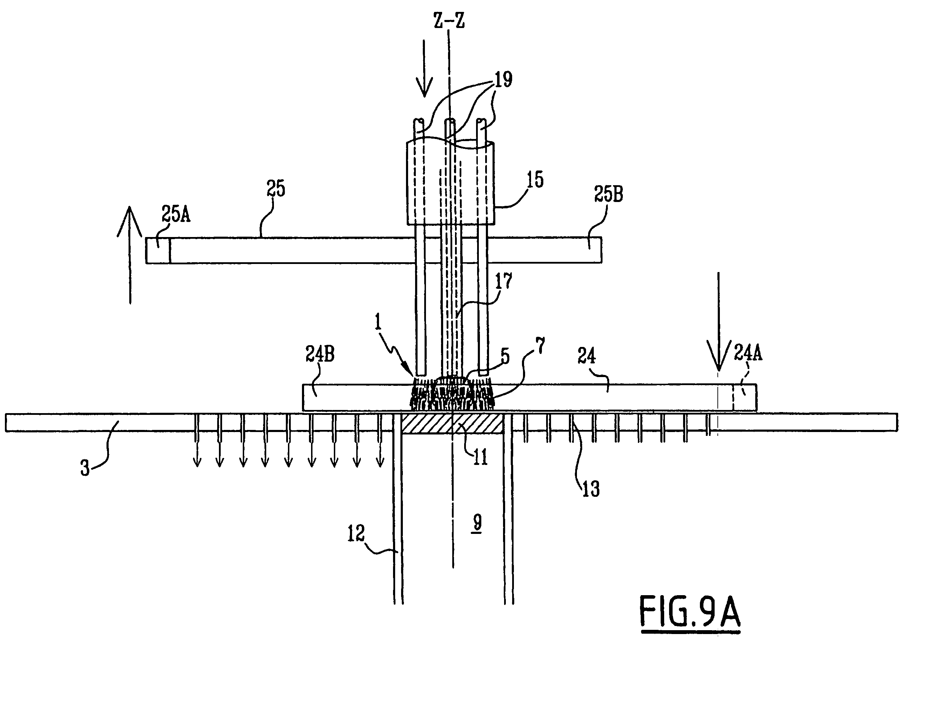

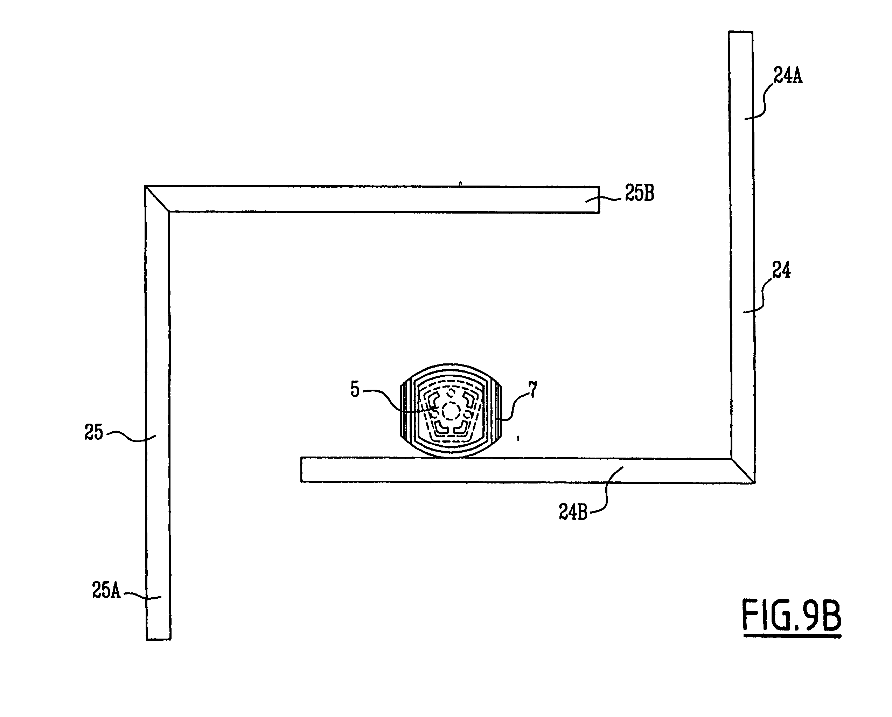

Cette configuration est illustrée de façon schématique aux Figures 9A et 9B. Un piston de rétention 19 est alors activé vers le bas, et le sac 7 est alors entièrement plié et maintenu dans sa configuration pliée par les pistons de rétention 19.

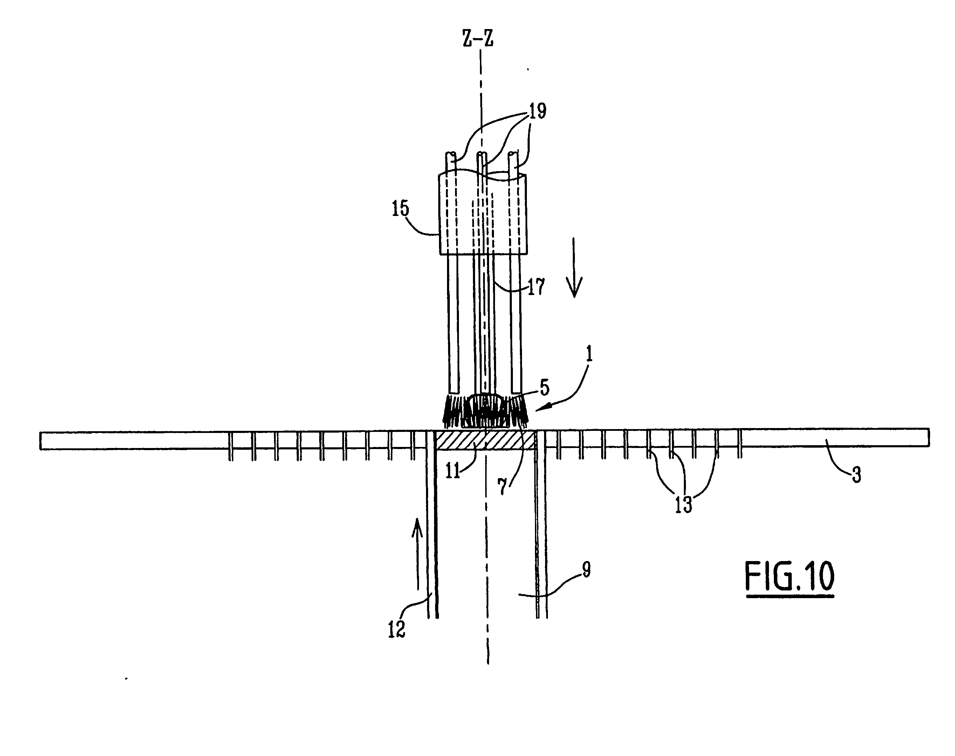

Les quatre phases élémentaires de compactage décrites jusqu'à présent ayant été réalisées, le dispositif de compactage constitué des bras 22, 23, des organes de compactage 24, 25 et des équipages mobiles de pressage mobile 28, est dégagé de la table pour sortir de l'encombrement défini par le piston d'expulsion 9 et le piston de compression 15. On se trouve alors dans la configuration représentée à la Figure 10.

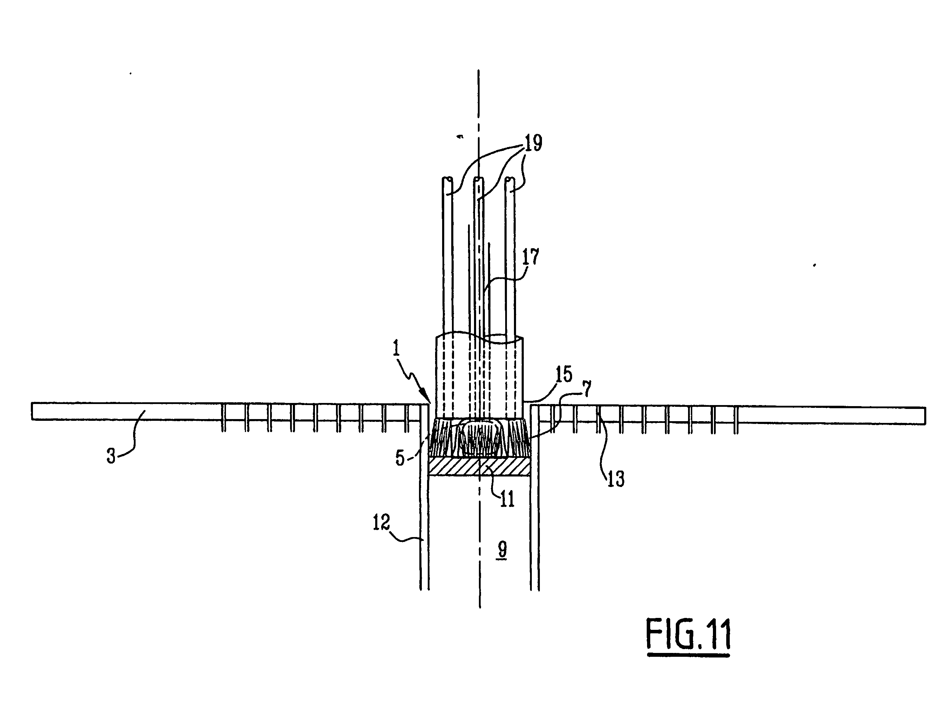

A partir de cette configuration, on actionne le piston de compression 15 jusqu'au contact de son extrémité libre avec le sac 7 et le générateur de gaz 5. Puis on actionne solidairement vers le bas par le piston de compression 15, les pistons de rétention 19, le piston d'expulsion 9 et le plateau 11. Comme représenté sur la Figure 11, le sac plié et son générateur de gaz 5 sont alors confinés dans un espace formé par le plateau 11, le piston 15, et les parois du cylindre creux 12.

Le piston de compression 15 peut éventuellement être animé d'un mouvement alternatif de translation verticale de façon à tasser les plis du sac. Le piston de compression 15 est ensuite retiré solidairement vers le haut avec le piston de maintien 17 et de rétention 19.

L'ensemble formé par les pistons 15, 17, 19 reprend ensuite la position initiale représentée à la Figure 2.

On amène ensuite, par le haut, de façon manuelle ou automatisée, un couvercle ou boîtier 40 destiné à recevoir le sac plié, tel que représenté à la Figure 12. Cette opération est effectuée dans le poste 3D.

Le boîtier 40 présente un volume intérieur correspondant sensiblement au volume de confinement qui a été défini plus haut, et des parois coïncidant sensiblement avec les parois 12. Comme on le voit sur cette Figure 12, le boîtier 40 est, dans l'exemple représenté, amené en position - d'attente au-dessus du sac plié par des moyens automatiques (ou automate) schématisés sous la référence 42. Un automate est prévu pour chaque type de sac, en l'occurrence deux automates sont prévus, l'un pour les sacs «conducteur» et l'autre pour les sacs «passager».

Comme indiqué par la flèche ascendante, il reste ensuite à déplacer le piston d'expulsion 9 vers le haut, jusqu'à introduire, en le pressant, le sac plié 1 à l'intérieur du boîtier 40 (Figure 13). Les moyens automatiques 42 d'amenée du boîtier 40 peuvent alors être actionnés pour extraire complètement le boîtier 40 équipé du sac plié 1, du dispositif de pliage.

Le procédé décrit précédemment est ensuite reproduit pour un autre sac placé dans le premier poste de charge 3A.

On conçoit que les moyens électroniques programmables associés à l'automate 20 permettent de piloter les mouvements respectifs des organes de compactage 24, 25 de l'équipage mobile 28 et de ses pistons 32A, 32B, de même que l'actionnement des pistons de rétention 19, en fonction des différentes phases du procédé. En particulier, l'actionnement des pistons de rétention 19 dépend de la position radiale de l'organe de compactage 24, 25 dans la phase élémentaire de compactage correspondante.

Le dispositif et le procédé qui viennent d'être décrits en référence aux Figures permettent d'être adaptés à plusieurs types de sacs gonflables, à savoir différentes géométries d'enveloppes et différentes localisations du générateur du gaz par rapport à celle-ci, moyennant des modifications mineures du programme de pilotage et des organes de compactage. Par conséquent, les outillages réalisés peuvent être hautement standardisés et nécessiter peu de réglage préalables à un changement de production. En effet, pour passer par exemple d'une production d'air-bags conducteurs à une production d'air-bags passagers, il suffit pour l'essentiel -de changer de programme de pilotage de l'automate et de remplacer les organes de compactage 24, 25. Dans l'état de la technique, au contraire, il était nécessaire, sinon de changer d'outillage, du moins d'en régler un grand nombre de parties constitutives.

L'invention permet d'atteindre les objectifs consistant à réaliser des pliages compacts et efficaces en terme de rapidité de déploiement, au moyen de machines automatiques offrant une grande standardisation, une grande souplesse de production, et une grande rapidité d'exécution.

## Revendications

1. Dispositif de pliage de sac gonflable d'un dispositif de sécurité de véhicule automobile, comportant une table (3) sensiblement horizontale destinée à supporter un sac (1) vide étalé, de sorte que le sac est maintenu en position sur la table au niveau d'une partie fixe (5), et au moins un organe de compactage (24, 25) déplaçable suivant au moins une direction parallèle à la table (3), de façon à pouvoir réaliser une opération de compactage du sac (1) en se déplaçant d'un point périphérique du sac (1) vers la partie fixe (5), **caractérisé en ce que** ledit organe de compactage (24, 25) comprend deux réglettes solidaires l'une de l'autre (24A, 24B, 25A, 25B), sensiblement perpendiculaires et s'étendant, en fonctionnement, parallèlement à la table, l'organe de compactage (24, 25) étant déplaçable, alternativement, suivant l'une et l'autre des directions (X-X, Y-Y) horizontales perpendiculaires respectivement à chaque réglette (24A, 24B, 25A, 25B).

2. Dispositif de pliage suivant la revendication 1, **caractérisé en ce que** ledit organe de compactage (24, 25) est monté mobile en rotation par rapport à la table (3) autour de l'axe vertical (Z-Z) passant par la partie fixe (5), de façon à pouvoir prendre successivement deux positions angulaires décalées de 180° par rapport audit axe (Z-Z), correspondant à quatre opérations élémentaires successives de compactage du sac (1), à partir de différents points périphériques du sac.

3. Dispositif de pliage suivant la revendication 1 ou 2, **caractérisé en ce qu'**il comprend un deuxième tel organe de compactage (24, 25) dont les réglettes (24A, 24B, 25A, 25B) sont respectivement parallèles aux deux réglettes du premier organe de compactage.

4. Dispositif de pliage suivant la revendication 3, **caractérisé en ce que** chaque organe de compactage (24, 25) est mobile verticalement, entre une position active en contact avec la table (3), et une position inactive dégagée au-dessus de la table, de sorte que les organes de compactage (24, 25) peuvent être en position active ou inactive, en alternance l'un par rapport à l'autre.

5. Dispositif de pliage suivant l'une quelconque des revendications 1 à 4, **caractérisé en ce qu'**il comporte en outre au moins un organe presseur (32A , 32B) lié en translation horizontale à l'organe de compactage (24, 25), et mobile par rapport à celui-ci suivant un axe sensiblement vertical (Z-Z) entre une position haute au-dessus de la table (3) et une position basse de pression sur le sac (1).

6. Dispositif de pliage suivant la revendication 5, **caractérisé en ce que** ledit organe presseur (32A, 32B) est mobile par rapport à l'organe de compactage (24, 25) suivant un mouvement alternatif entre les positions haute et basse.

7. Dispositif de pliage suivant la revendication 5 ou 6, **caractérisé en ce que** ledit organe presseur (32A, 32B) est adapté pour être, dans sa position haute, dégagé du sac (1).

8. Dispositif de pliage suivant l'une quelconque des revendications 5 à 7, **caractérisé en ce qu'**il comporte deux tels organes presseurs (32A, 32B) décalés dans la direction de déplacement de l'organe de compactage (24, 25).

9. Dispositif de pliage suivant la revendication 8, **caractérisé en ce que** lesdits organes presseurs (32A, 32B) sont adaptés pour être animés d'un mouvement relatif en translation l'un par rapport à l'autre, suivant leur axe de déplacement sensiblement vertical.

10. Dispositif de pliage suivant l'une quelconque des revendications 5 à 9, **caractérisé en ce qu'**il comprend pour chaque réglette (24A, 24B, 25A, 25B), un organe presseur associé (32A, 32B), actif lors du déplacement de l'organe de compactage (24, 25) de ladite réglette dans la direction perpendiculaire à ladite réglette.

11. Dispositif de pliage suivant l'une quelconque des revendications 1 à 10, **caractérisé en ce qu'**il comporte au moins un organe de rétention (19) mobile suivant un axe sensiblement vertical entre une position dégagée du sac (1) située au-dessus de la table (3), et une position d'appui sur une partie du sac radialement extérieure par rapport à la partie fixe (5), définissant une partie de rétention.

12. Dispositif de pliage suivant la revendication 11, **caractérisé en ce qu'**il comporte des moyens électroniques programmables de contrôle et de commande de la position et du déplacement de l'organe de compactage (24) et de l'organe de rétention (19).

13. Dispositif de pliage suivant l'une quelconque des revendications 1 à 12, **caractérisé en ce que** la table (3) est-pourvue de pinces (50) adaptées pour passer d'une position escamotée dans la table (3) à une position en saillie de serrage d'une partie de sac pliée.

14. Dispositif de pliage suivant l'une quelconque des revendications 1 à 13, **caractérisé en ce qu'**il comprend un poste de chauffage (3B) dans lequel sont disposés des moyens de chauffage (103) du sac.

15. Dispositif de pliage suivant la revendication 14, **caractérisé en ce qu'**il comprend un organe de maintien (17) mobile suivant un axe (ZZ) sensiblement vertical, entre une position dégagée au-dessus de la table (3) et une position d'appui plus basse, et la table (3) est susceptible de rotation autour d'un axe sensiblement vertical, de façon à prendre au moins deux positions angulaires par rapport audit axe, une position correspondant à la position du sac
(1) dans le poste de chauffage (3B), et l'autre position correspondant à la position de la partie fixe (5) au droit de l'organe de maintien (17) et aux opérations de compactage.

16. Dispositif de pliage suivant l'une quelconque des revendications 1 à 15, **caractérisé en ce que** la table (3) est pourvue de moyens d'aspiration (13) adaptés pour exercer sur le sac (1) des efforts d'aspiration tendant à le plaquer localement sur la table (3).

17. Procédé d'utilisation d'un dispositif suivant l'une quelconque des revendications 1 à 16 pour réaliser le pliage d'un sac gonflable pour dispositif de sécurité de véhicule automobile, dans lequel on place le sac (1) vide étalé sur une table (3), on maintient le sac (1) plaqué sur la table (3) autour d'une partie fixe (5) en exerçant un effort de maintien sur ladite partie fixe (5) du sac, **caractérisé en ce qu'**on réalise ensuite la séquence d'opérations successives suivante :
- une première opération élémentaire de compactage, dans laquelle on compacte le sac (1) en déplaçant l'organe de compactage (24, 25) vers la partie fixe (5) suivant une première direction sensiblement parallèle à la table (3) et orthogonale à la première réglette (24A, 25A) de l'organe de compactage (24, 25) ;
- on maintient la partie de sac ainsi compactée en exerçant une pression sensiblement verticale, au moyen d'un organe de rétention (19) ;
- une deuxième opération élémentaire de compactage, dans laquelle on compacte le sac (1) en déplaçant le même organe de compactage (24, 25) vers la partie fixe (5) dans une direction sensiblement parallèle à la table (3) et orthogonale à la deuxième réglette (24B, 25B) du même organe de compactage ; et
- on maintient la partie de sac ainsi compactée en exerçant une pression sensiblement verticale, au moyen d'un organe de rétention (19).

18. Procédé d'utilisation d'un dispositif suivant la revendication 17, **caractérisé en ce qu'** on réalise consécutivement deux telles séquences d'opérations et qu'entre lesdites deux séquences, on déplace angulairement l'organe de compactage (24) par rapport à un axe sensiblement vertical (Z-Z) passant par la partie fixe (5).

19. Procédé d'utilisation d'un dispositif suivant la revendication 4, ledit procédé étant conforme à la revendication 17, **caractérisé en ce qu'**on réalise les opérations successives suivantes :
- on réalise une première opération élémentaire de compactage au moyen d'une première réglette (24A) du premier organe de compactage (24);
- on dégage le premier organe de compactage (24) dans sa position inactive, de sorte qu'il ne puisse interférer avec le déplacement du deuxième organe de compactage (25);
- on réalise une première opération élémentaire de compactage au moyen d'une première réglette (25A) du deuxième organe de compactage (25), parallèle à la première réglette (24A) du premier organe de compactage (24);
- on réalise une deuxième opération élémentaire de compactage au moyen de la deuxième réglette (25B) du deuxième organe de compactage (25) ;
- on dégage le deuxième organe de compactage (25) dans sa position inactive, de sorte qu'il ne puisse interférer avec le déplacement du premier organe de compactage (24), et on déplace le premier organe de compactage (24) dans sa position active ; et
- on réalise une deuxième opération élémentaire de compactage au moyen de la deuxième réglette (24B) du premier organe de compactage (24).

20. Procédé de pliage suivant l'une quelconque des revendications 17 à 19, **caractérisé en ce que** durant chaque opération élémentaire de compactage, on exerce des pressions alternatives suivant une direction sensiblement verticale (Z-Z) sur la partie de sac en cours de compactage, de façon à former des plis.

21. Procédé de pliage suivant la revendication 20, **caractérisé en ce qu'**on exerce lesdites pressions alternatives en au moins deux régions de la partie de sac en cours de compactage, décalées dans la direction de déplacement parallèle à la table.

22. Procédé de pliage suivant l'une quelconque des revendications 17 à 21, **caractérisé en ce qu'**on crée une dépression entre le sac (1) et la table de support (3) par des moyens d'aspiration (13).

23. Procédé de pliage suivant l'une quelconque des revendications 17 à 22, **caractérisé en ce qu'**on réalise une opération de chauffage du sac, préalablement à la séquence d'opérations élémentaires.

## Patentansprüche

1. Vorrichtung für das Falten eines aufblasbaren Gassacks einer Sicherheitsvorrichtung eines Kraftfahrzeuges, die einen weitgehend horizontalen Tisch (3) enthält, der einen leeren ausgebreiteten Sack (1) so hält, dass der Sack auf dem Tisch auf einem festen Teil (5) in Position gehalten wird, sowie mindestens ein Organ für das Verpressen (24, 25) aufweist, das mindestens in einer Richtung parallel zu dem Tisch (3) so verschiebbar ist, dass ein Verpressen des Sackes (1) **dadurch** möglich wird, dass man sich von einem peripheren Punkt des Sackes (1) gegen den festen Teil bewegt,
**dadurch gekennzeichnet , dass**
dieses Organ für das Verpressen (24, 25) zwei aneinander befestigte Schienen (24A, 24B, 25A, 25B) enthält, die weitgehend rechtwinklig angeordnet sind und im Betrieb parallel zu dem Tisch verlaufen, und das Organ für das Verpressen (24, 25) abwechselnd in die eine oder andere Richtung (X-X, Y-Y) horizontal rechtwinklig zu den Schienen (24A, 24B, 24A, 25B) verschoben werden kann.

2. Vorrichtung für das Falten eines aufblasbaren Gassacks nach Anspruch 1,
**dadurch gekennzeichnet, dass**
dieses Organ für das Verpressen (24, 25) drehbar beweglich gegenüber dem Tisch (3) um die vertikale Achse (Z-Z) den festen Teil (5) durchquerend so montiert ist, dass es nacheinander zwei um 180° versetzte Winkelpositionen gegenüber der Achse (Z-Z) einnehmen kann, welche den vier aufeinanderfolgenden elementaren Operationen für das Verpressen des Sackes (1) ab den verschiedenen peripheren Punkten des Sackes entsprechen.

3. Vorrichtung für das Falten eines aufblasbaren Gassackes nach einem der Ansprüche 1 oder 2,
**dadurch gekennzeichnet, dass**
sie ein zweites Organ für das Verpressen (24, 25) enthält, dessen Schienen (24A, 24B, 25A, 25B) jeweils parallel zu den beiden Schienen des ersten Organs für das Verpressen verlaufen.

4. Vorrichtung für das Falten eines aufblasbaren Gassackes nach Anspruch 3,
**dadurch gekennzeichnet, dass**
jedes Organ für das Verpressen (24, 25) vertikal zwischen einer aktiven Position in Kontakt mit dem Tisch (3) und einer inaktiven Position, die oberhalb des Tisches frei liegt, so vertikal verschoben werden kann, dass sich die Organe für das Verpressen abwechselnd untereinander in einer aktiven oder inaktiven Position befinden können.

5. Vorrichtung für das Falten eines aufblasbaren Gassackes nach einem der Ansprüche 1 bis 4,
**dadurch gekennzeichnet, dass**
sie außerdem mindestens ein Druckorgan (32A, 32B) enthält, das horizontal verschiebbar mit dem Organ für das Verpressen (24, 25) verbunden ist, und gegenüber diesem in einer weitgehend vertikalen Achse (Z-Z) zwischen einer oberen Position über dem Tisch (3) und einer unteren Position für die Bedrückung des Sackes (1) beweglich ist.

6. Vorrichtung für das Falten eines aufblasbaren Gassackes nach Anspruch 5,
**dadurch gekennzeichnet, dass**
das Druckorgan (32A, 32B) gegenüber dem Organ für das Verpressen (24, 25) in einer abwechselnden Bewegung zwischen der oberen Position und der unteren Position bewegt werden kann.

7. Vorrichtung für das Falten eines aufblasbaren Gassackes nach einem der Ansprüche 5 oder 6,
**dadurch gekennzeichnet, dass**
das Druckorgan (32A, 32B) so ausgelegt ist, dass es in seiner oberen Position von dem Sack (1) gelöst werden kann.

8. Vorrichtung für das Falten eines aufblasbaren Gassackes nach einem der Ansprüche 5 bis 7,
**dadurch gekennzeichnet, dass**
es zwei dieser Druckorgane (32A, 32B) enthält, welche in der Richtung der Verschiebung des Organs für das Verpressen (24, 25) versetzt angeordnet sind.

9. Vorrichtung für das Falten eines aufblasbaren Gassackes nach Anspruch 8,
**dadurch gekennzeichnet, dass**
die Druckorgane (32A, 32B) so ausgelegt sind, dass sie durch eine relative seitliche Bewegung gegeneinander in ihrer weitgehend vertikalen Achse der Verschiebung bewegt werden können.

10. Vorrichtung für das Falten eines aufblasbaren Gassackes nach einem der Ansprüche 5 bis 9,
**dadurch gekennzeichnet, dass**
sie für jede der Schienen (24A, 24B, 25A, 25B) ein zugeordnetes Druckorgan (32A, 32B) enthält, sowie ein zugeordnetes Druckorgan (32A, 32B) enthält, das bei der Verschiebung des Organs für das Verpressen (24, 25) dieser Schiene in der Richtung rechtwinklig zu dieser Schiene aktiv ist

11. Vorrichtung für das Falten eines aufblasbaren Gassackes nach einem der Ansprüche 1 bis 10,
**dadurch gekennzeichnet, dass**
sie mindestens ein Rückhalteorgan (19) enthält, das entlang einer weitgehend vertikalen Achse zwischen der gelösten Position des Sackes (1) oberhalb des Tisches (3) und einer Position der Abstützung auf dem Sack an der radialen Außenseite gegenüber dem festen Teil (5) beweglich ist, welcher den Rückhalteteil bildet.

12. Vorrichtung fur das Falten eines aufblasbaren Gassackes nach Anspruch 11,
**dadurch gekennzeichnet, dass**
sie programmierbare elektronische Mittel für die Kontrolle und Steuerung der Position und der Verschiebung des Organs für das Verpressen (24) und des Organs für die Rückhaltung (19) enthält.

13. Vorrichtung für das Falten eines aufblasbaren Gassackes nach einem der Ansprüche 1 bis 12,
**dadurch gekennzeichnet, dass** *
der Tisch (3) mit Klemmen (50) ausgestattet ist, die so ausgelegt sind, dass sie von einer gelösten Position in dem Tisch (3) in eine herausstehende Position für das Einklemmen eines Teils des gefalteten Sackes verschoben werden können.

14. Vorrichtung für das Falten eines aufblasbaren Gassackes nach einem der Ansprüche 1 bis 13,
**dadurch gekennzeichnet, dass**
sie einen Heizposten (3B) enthält, in dem die Mittel für die Erwärmung (103) angeordnet sind.

15. Vorrichtung für das Falten eines aufblasbaren Gassackes nach Anspruch 14,
**dadurch gekennzeichnet, dass**
sie ein entlang der weitgehend vertikalen Achse (ZZ) angeordnetes Halterungsorgan (17) enthält, das zwischen einer gelösten Position über dem Tisch (3) und einer weiter unten liegenden Auflageposition beweglich ist, und der Tisch (3) um eine weitgehend vertikale Achse so gedreht werden kann, dass er mindestens zwei Winkelpositionen gegenüber dieser Achse einnehmen kann, wobei eine dieser Positionen der Position des Sackes (1) in dem Heizposten (3B) entspricht, während die andere Position der Position des festen Teils (5) an dem Halteorgan (17) und den Operationen für das Verpressen entspricht.

16. Vorrichtung für das Falten eines aufblasbaren Gassackes nach einem der Ansprüche 1 bis 15,
**dadurch gekennzeichnet, dass**
der Tisch (3) mit Ansaugmitteln (13) ausgestattet ist, die so ausgelegt sind, dass sie auf den Sack eine Saugkraft ausüben können, um ihn lokal an den Tisch (3) anzupressen

17. Verfahren für die Verwendung einer Vorrichtung nach einem der Ansprüche 1 bis 16 für das Falten eines aufblasbaren Sackes für eine Sicherheitsvorrichtung in einem Kraftfahrzeug, bei dem der leere Sack auf einem Tisch (3) ausgebreitet wird, und der Sack (1) auf dem Tisch (3) um einen festen Teil (5) **dadurch** festgehalten wird, dass eine Haltekraft auf den festen Teil des Sackes ausgeübt wird,
**dadurch gekennzeichnet, dass**
anschließend folgende Operationen durchgeführt werden:
- eine erste elementare Operation des Verpressens, bei welcher der Sack (1) **dadurch** verpresst wird, dass das Organ für das Verpressen (24, 25) gegen den festen Teil (5) in einer ersten Richtung weitgehend parallel zu dem Tisch (3) und orthogonal zu der ersten Schiene (24A, 25A) des Organs für das Verpressen (24, 25) verschoben wird;
- der so verpresste Teil des Sackes wird **dadurch** gehalten, dass mit Hilfe eines Rückhalteorgans (19) ein weitgehend vertikaler Druck ausgeübt wird;
- eine zweite elementare Operation des Verpressens, bei welcher der Sack (1) **dadurch** verpresst wird, dass dasselbe Organ für das Verpressen (24, 25) gegen den festen Teil (5) in einer weitgehend parallelen Richtung zu dem Tisch (3) und orthogonal zu der zweiten Schiene (24B, 25B) desselben Organs für das Verpressen verschoben wird; und
- der so verpresste Teil wird **dadurch** gehalten, dass mit Hilfe eines Rückhalteorgans (19) ein weitgehend vertikaler Druck ausgeübt wird.

18. Verfahren für die Verwendung einer Vorrichtung nach Anspruch 17,
**dadurch gekennzeichnet, dass**
nacheinander zwei solcher Folgen von Operationen durchgeführt werden und dass zwischen diesen Folgen das Organ für das Verpressen (24) gegenüber einer weitgehend vertikalen Achse (Z-Z) winklig verschoben werden, welche den festen Teil (5) durchquert.

19. Verfahren für die Verwendung einer Vorrichtung nach Anspruch 4, das dem Verfahren nach Anspruch 17 entspricht,
**dadurch gekennzeichnet, dass**
nacheinander folgende Operationen durchgeführt werden:
- eine erste elementare Operation für das Verpressen des ersten Organs für das Verpressen (24) mit Hilfe einer ersten Schiene (24A);
- das erste Organ für das Verpressen (24) wird in seiner inaktiven Position so freigesetzt, dass es die Verschiebung des zweiten Organs für das Verpressen (25) nicht stören kann;
- es wird eine erste elementare Operation für das Verpressen mit Hilfe einer ersten Schiene (25A) des zweiten Organs für das Verpressen (25) parallel zu der ersten Schiene (24A) des ersten Organs für das Verpressen (24) durchgeführt;
- es wird eine zweite elementare Operation für das Verpressen mit Hilfe der zweiten Schiene (25B) des zweiten Organs für das Verpressen (25) durchgeführt;
- das zweite Organ für das Verpressen (25) wird in seiner inaktiven Position so freigesetzt, dass es die Verschiebung des ersten Organs für das Verpressen (24) nicht stören kann und das erste Organ für das Verpressen (24) wird in seine aktive Position bewegt; und
- es wird eine zweite elementare Operation für das Verpressen mit Hilfe der zweiten Schiene (24B) des ersten Organs für das Verpressen (24) durchgeführt.

20. Verfahren für das Falten eines aufblasbaren Gassackes nach einem der Ansprüche 17 bis 19,
**dadurch gekennzeichnet, dass**
während der elementaren Operation des Verpressens abwechselnde Drücke in einer weitgehend vertikalen Richtung (Z-Z) auf den Teil des Sackes, der verpresst wird, ausgeübt wird, um so Falten zu bilden.

21. Verfahren für das Falten eines aufblasbaren Gassackes nach Anspruch 20,
**dadurch gekennzeichnet, dass**
diese abwechselnden Drücke in mindestens zwei Bereichen des Teils des Sackes ausgeübt werden, der verpresst werden soll, und zwar versetzt in der Richtung der Verschiebung parallel zu dem Tisch.

22. Verfahren für das Falten eines aufblasbaren Gassackes nach einem der Ansprüche 17 bis 21,
**dadurch gekennzeichnet, dass**
mit Hilfe von Ansaugmitteln (13) ein Unterdruck zwischen dem Tisch (1) und dem Auflagetisch (3) erzeugt wird.

23. Verfahren zum Falten eines aufblasbaren Gassackes nach einem der Ansprüche 17 bis 22,
**dadurch gekennzeichnet, dass**
eine Operation der Erwärmung des Sackes vor der Durchführung der Folge der elementaren Operationen durchgeführt wird.

## Claims

1. Apparatus for folding an airbag belonging to a safety device for a motor vehicle, comprising a substantially horizontal table (3) adapted to support a spread-out empty bag (1), so that the bag is held m position on the table at a fixed part (5), and at least one compacting member (24, 25) which is movable in at least one direction parallel to the table (3), so as to allow a compacting operation of the bag (1) by moving from a peripheral point of the bag (1) towards the fixed part (5), charactensed in that the compacting member (24, 25) comprises two battens (24A, 24B, 25A, 25B) integrally attached to one another, which are substantially perpendicular and extend parallel to the table, during operation, the compacting member (24, 25) being movable alternately in one or other of the horizontal directions (X-X, Y-Y) which are respectively perpendicular to each batten (24A, 24B, 25A, 25B).

2. Folding apparatus according to claim 1, **characterised in that** the compacting member (24, 25) is mounted to be movable by rotation relative to the table (3) about the vertical axis (Z-Z) passing through the fixed part (5), so as to be able to successively adopt two angular positions offset by 180° relative to said axis (Z-Z), corresponding to four successive elementary operations of compacting the bag (1), from different peripheral points of the bag.

3. Folding apparatus according to claim 1 or 2, **characterised in that** it comprises a second such compacting member (24, 25) the battens (24A, 24B, 25A, 25B) of which are respectively parallel to the two battens of the first compacting member.

4. Folding apparatus according to claim 3, **characterised in that** each compacting member (24, 25) is vertically movable between an active position in contact with the table (3) and an inactive released position above the table, so that the compacting members (24, 25) can alternately be in the active or inactive position relative to one another.

5. Folding apparatus according to any one of claims 1 to 4, **characterised in that** it further comprises at least one pressing member (32A, 32B) connected for horizontal translation to the compacting member (24, 25) and movable relative thereto along a substantially vertical axis (Z-Z) between a top position above the table (3) and a bottom position pressing on the bag (1).

6. Folding apparatus according to claim 5, **characterised in that** the pressing member (32A, 32B) is movable relative to the compacting member (24, 25) in an alternating movement between the top and bottom positions.

7. Folding apparatus according to claim 5 or 6, **characterised in that** the pressing member (32A, 32B) is adapted to be released from the bag (1) in its top position.

8. Folding apparatus according to any one of claims 5 to 7, **characterised in that** it comprises two such pressing members (32A, 32B) offset in the direction of movement of the compacting member (24, 25).

9. Folding apparatus according to claim 8, **characterised** m that the pressing members (32A, 32B) are adapted to be subjected to a relative movement of translation relative to one another along their substantially vertical axis of travel.

10. Folding apparatus according to any one of claims 5 to 9, **characterised** m that it comprises, for each batten (24A, 24B, 25A, 25B), an associated pressing member (32A, 32B) which is active during the movement of the compacting member (24, 25) of said batten in the direction perpendicular to said batten.

11. Folding apparatus according to any one of claims 1 to 10, **characterised in that** it comprises at least one retaining member (19) which is movable in the direction of a substantially vertical axis between a position released from the bag (1) located above the table(3) and a position bearing on part of the bag which is radially outside, relative to the fixed part (5), defining a retention part.

12. Folding apparatus according to claim 11, **characterised in that** it comprises programmable electronic means for monitoring and controlling the position and movement of the compacting member (24) and retaining member (19).

13. Folding apparatus according to any one of claims 1 to 12, **characterised in that** the table (3) is provided with grippers (50) adapted to move from a retracted position within the table (3) to a projecting position for gripping a folded bag part.

14. Folding apparatus according to any one of claims 1 to 13, **characterised in that** it comprises a heating station (3B) in which heating means (103) for the bag are provided.

15. Foldmg apparatus according to claim 14, **characterised in that** it comprises holding means (17) which are movable in the direction of a substantially vertical axis (ZZ) between a released position above the table (3) and a bearing position lower down, and the table (3) is capable of rotating about a substantially vertical axis, so as to take up at least two angular positions relative to said axis, one position corresponding to the position of the bag (1) in the heating station (3B) and the other position corresponding to the position of the fixed part (5) perpendicular to the holding means (17) and the compacting operations.

16. Folding apparatus according to any one of claims 1 to 15, charactensed in that the table (3) is provided with suction means (13) adapted to exert suction forces on the bag (1) tending to flatten it locally on the table (3).

17. Method of using an apparatus according to any one of claims 1 to 16 for carrying out the folding of an airbag for a safety device in a motor vehicle, wherein the empty bag (1) is placed spread out on a table (3), the bag (1) is held flat on the table (3) about a fixed part (5) by applying a holding force to said fixed part (5) of the bag, **characterised** m that the following sequence of successive operations is then carried out:
- a first elementary compacting operation in which the bag (1) is compacted by moving the compacting member (24, 25) towards the fixed part (5) in a first direction substantially parallel to the table (3) and perpendicular to the first batten (24A, 25A) of the compacting member (24, 25);
- the bag part thus compacted is held by exerting substantially vertical pressure by means of a retaining member (19);
- a second elementary compacting operation in which the bag (1) is compacted by moving the same compacting device (24, 25) towards the fixed part (5) m a direction substantially parallel to the table (3) and perpendicular to the second batten (24B, 25B) of the same compacting member; and
- the bag part thus compacted is held by exerting substantially vertical pressure by means of a retaining member (19).

18. Method of using an apparatus according to claim 17, **characterised in that** two such sequences of operations are carried out consecutively and between the two sequences the compacting member (25) is displaced angularly relative to a substantially vertical axis (Z-Z) passing through the fixed part (5).

19. Method of using an apparatus according to claim 4, the process being m accordance with claim 17, **characterised in that** the following successive operations are carried out:
- a first elementary compacting operation is carried out by means of a first batten (24A) of the first compacting member (24);
- the first compacting member (24) is released into its inactive position so that it cannot interfere with the movement of the second compacting member (25);
- a first elementary compacting operation is carried out using a first batten (25A) of the second compacting member (25), parallel to the first batten (24A) of the first compacting member (24);
- a second elementary compacting operation is carried out using the second batten (25B) of the second compacting member (25);
- the second compacting member (25) is released into its inactive position, so that it cannot interfere with the movement of the first compacting member (24), and the first compacting member (24) is moved into its active position; and
- a second elementary compacting operation is carried out using the second batten (24B) of the first compacting member (24).

20. Folding method according to any one of claims 17 to 19, **characterised in that** during each elementary compacting operation, alternating pressures are exerted in a substantially vertical direction (Z-Z) on the part of the bag being compacted, so as to form folds.

21. Method of folding according to claim 20, **characterised in that** said alternative pressures are exerted in at least two regions of the bag part being compacted, which are offset in the direction of movement parallel to the table.

22. Method of folding according to any one of claims 17 to 21, **characterised in that** an underpressure is created between the bag (1) and the support table (3) by suction means (13).

23. Method of folding according to any one of claims 17 to 22, **characterised in that** a heating operation is carried out on the bag prior to the sequence of elementary operations.
